# EUROPEAN PATENT SPECIFICATION

(11) **EP 1 928 042 B1**
(45) Date of publication and mention of the grant of the patent: **01.12.2010**
(21) Application number: 07119065.6
(22) Date of filing: 23.10.2007
(51) Int. Cl.: H01M 2/12, H01M 2/10

(54) **Prismatic can type lithium ion rechargeable battery**
Prismatische dosenförmige wiederaufladbare Lithium-Ionenbatterie
Batterie rechargeable au lithium ion de type canette prismatique

(30) Priority: 25.10.2006 KR 20060103941
(43) Date of publication of application: 04.06.2008
(73) Proprietor: Samsung SDI Co., Ltd., Gyeonggi-do (KR)
(72) Inventor: UH, Hwail, Gyeonggi-do (KR); Lee, Sangwoo, Gyeonggi-do (KR)
(74) Representative: Walaski, Jan Filip

(56) References cited:
- EP-A- 1 258 931
- WO-A-02/27819
- CA-A1- 2 165 152
- JP-A- 2002 237 283
- US-A- 4 803 136

## Description

The present invention relates to a prismatic can type lithium ion battery and, more particularly, to a prismatic can type lithium ion rechargeable battery that improves the operational reliability of a safety vent in response to an increased internal pressure.

With the development of electronic industries, parts of electronic devices have been miniaturized and thereby various portable electronic devices have been developed. Batteries are used as a power supply of such portable electronic devices, in which secondary batteries are more cost effective than primary batteries, since the secondary batteries can be recharged and reused. Accordingly, various secondary batteries of small size and high capacity have been developed and widely used. Especially, lithium second batteries are widely used as a power supply of portable electronic devices, since they can accumulate a lot of energy for their volume and weight.

Though a pouch type lithium rechargeable battery has been manufactured recently, a can type lithium rechargeable battery in which an electrode assembly including a positive electrode, a negative electrode, and a separator disposed between the two electrodes are enclosed along with an electrolyte in a metal can has been manufactured prevalently. Such a can type rechargeable battery can be classified into a cylinder type battery designed for improving the capacity and a prismatic battery designed in a small thickness for reducing its volume and increasing the portability.

A lithium ion rechargeable battery is, generally, made of a positive electrode active material for forming a positive electrode and a negative electrode active material for forming a negative electrode. As the positive electrode active material, LiCoO₂ (lithium cobalt oxide), LiNiO₂ (lithium nickel oxide), Li₂MnO₄ (lithium manganese oxide), a lithium salt of an oxide solid solution, including at least two selected from the group consisting of cobalt, nickel and manganese that enable intercalation and deintercalation of lithium ions, is used. As the negative electrode active material, various carbon structures that also enable intercalation and deintercalation of lithium ions are used.

These two electrode active materials are made in the form of slurry including binder, solvent, conductor and the like, and coated on the surface of current collectors, thus forming the two electrodes.

A separator for preventing electric contact between the two electrodes is disposed therebetween and an electrolyte is necessarily established between the two electrodes to enable current flow therein based on lithium ions.

The lithium battery has a high charge/discharge operation voltage in which side reactions between electrolyte and electrode materials may occur. Side reactions between electrolyte and electrode materials may occur at high temperature caused by the heat when operating. As a result, gas is generated to increase the internal pressure of the battery, thus expanding the battery. Moreover, in the case of a graphite negative electrode, its volume may be increased when intercalating lithium ions to charge, which results in expansion of the electrode assembly and the battery.

The gas generation and the internal pressure increase of the battery result mainly from unusual reactions in the battery and, if such unusual reactions continue to occur over a specific level, the battery may explode, which, of course, decreases the safety of the battery. Accordingly, in preparation for the case where the internal pressure is increased over a specific level, a safety device such as a safety vent is established to intercept the operation of the battery using the increased internal pressure.

However, even if the battery is operated in normal condition, some of the gas generation may occur and the can, the case of rechargeable battery, may swell. But, if the can is made to swell easily, the change of the shape of the can by swelling causes the decrease of the internal pressure of the can and makes it difficult for the vent to act promptly.

The swelling of the can also makes it difficult for the cell having the swelled can to be adopted or inserted in a electric/electronic devices.

Accordingly, the swelling of a can, along with the change of the shape of the can should be prevented and a safety vent should operate in an accurate range of internal pressure.

CA2165152, JP2002 237283, WO02/27819 and EP1258931 disclose various types of safety vent for secondary batteries.
The present invention may provide a prismatic can type lithium ion rechargeable battery having a structure for solving the safety problems in forming a safety vent as described above.

Another object of the present invention is to provide a prismatic can type lithium ion rechargeable battery that may burst in response to gas overpressure by concentrating the distortion forces generated in the can of the prismatic battery caused by the increased internal pressure, thus improving the safety of the lithium ion rechargeable battery.

According to the invention, there is provided a prismatic can type lithium ion rechargeable battery according to claim 1.

The weakened portion may be formed as a line formed outside a periphery of the distortion prevention portion. The distortion prevention portion may be formed as a line that is substantially parallel to a first direction that extends from the top surface to the bottom surface, or the distortion prevention portion is formed as a line that is oblique to the first direction. A notch may be formed along the line of the weakened portion. The line of the weakened portion can be formed as a curved line that curves along the periphery of the distortion prevention portion.

The weakened portion can be formed closer to the cap assembly than a center of the maximum area surface, the weakened portion formed substantially parallel to the top surface, and the distortion prevention portion can be formed in a line shape that is substantially parallel to a first direction that extends from the top surface to the bottom surface, the distortion prevention portion having a prominence or a depression. The weakened portion can be formed in an inverted U-shape, the top of the inverted U-shaped weakened portion being closer to the cap assembly than the bottom of the inverted U-shaped weakened portion, and a first end of the line shaped distortion prevention portion may be surrounded by the inverted U-shaped weakened portion in a manner that the line shaped distortion prevention portion extends from the first end towards the bottom surface through the bottom of the inverted U-shaped weakened portion.

The weakened portion can be formed closer to the cap assembly than a center of the maximum area surface, the weakened portion formed substantially parallel to the top surface, and the distortion prevention portion can be formed in an open rectangular shape. The weakened portion can be formed in an inverted U-shape, the top of the inverted U-shape being closer to the cap assembly than the bottom of the inverted U-shape, and the open rectangular shaped distortion prevention portion may have a shorter side and a longer side, the shorter side of the open rectangular shaped distortion prevention portion being surrounded by the inverted U-shaped weakened portion in a manner that the longer side of the open rectangular shaped distortion prevention portion extends along a first direction, which extends from the top surface to the bottom surface, towards the bottom surface through the bottom of the inverted U-shape. The distortion prevention portion may have a portion selected from the group consisting of a stepped portion, a thickened portion, and a partially bent portion on the maximum area surface.

The weakened portion can be formed closer to the cap assembly than a center of the maximum area surface, the weakened portion formed substantially parallel to the top surface, and the distortion prevention portion can be formed as an open lozenge. The weakened portion may be formed in an inverted V-shape, the top of the inverted V-shape being closer to the cap assembly than the bottom of the inverted U-shape, and a corner of the open lozenge of the distortion prevention portion may be surrounded by the inverted U-shaped weakened portion.

The distortion prevention portion can be formed in an open rectangular shape, the open rectangular shaped distortion prevention structure having a shorter side and a longer side, the longer side of the open rectangular shaped distortion prevention portion extending along a first direction, which extends from the top surface to the bottom surface, towards the bottom surface, and the weakened portion can be formed to surround a corner of the open rectangular shaped distortion prevention portion, the weakened portion being formed closer to the cap assembly than a center of the maximum area surface.

The weakened portion may act as a safety vent rupturable in response to gaseous overpressure in the can.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 illustrates the top of a front sectional view illustrating a structure of an electrode assembly, a can and a cap assembly in a prismatic can type lithium ion rechargeable battery in accordance with an exemplary embodiment of the present invention;
FIG. 2 is a front view illustrating a prismatic can of the lithium ion battery in accordance with the exemplary embodiment of the present invention, in which a weakened portion constituting a safety vent and a distortion prevention portion are established in the middle of the maximum area surface;
FIG. 3 is a cross sectional view depicting a can wall, on which the safety vent and the distortion prevention portion of FIG. 2 are formed together;
FIG. 4 is a longitudinal sectional view of a cap plate and a can wall for illustrating how the weakened portion of the safety vent is fractured in accordance with the exemplary embodiment of the present invention;
FIG. 5 is a front view depicting a state where a safety vent is established by considering a concept of a maximum distortion portion on the maximum area surface of the prismatic can of FIG. 2;
FIG. 6 is a front view illustrating the maximum distortion portion of the prismatic can of the lithium ion battery in accordance with the present invention in dotted line; and
FIGS. 7 to 11 are front view illustrating several shapes, in which various distortion prevention portions and weak areas are formed in accordance with other embodiments of the present invention.

Hereinafter, preferred embodiments according to the present invention will be described with reference to the accompanying drawings. The preferred embodiments are provided so that those skilled in the art can sufficiently understand the present invention, but can be modified in various forms and the scope of the present invention is not limited to the preferred embodiment.

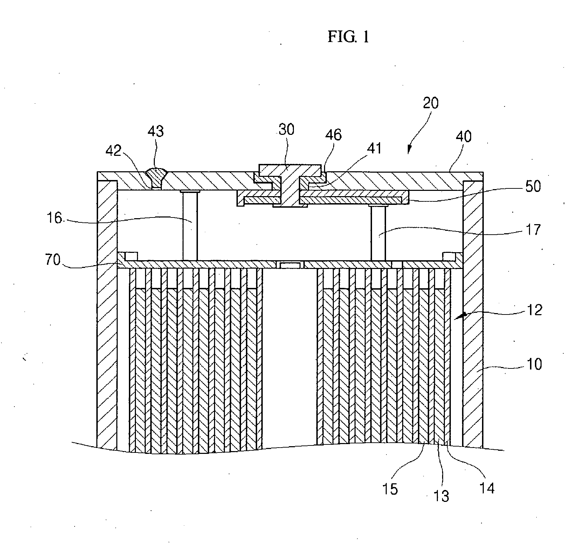

FIG. 1 is the top front sectional view illustrating a structure of an electrode assembly, a can and a cap assembly in a prismatic can type lithium ion rechargeable battery in accordance with a exemplary embodiment of the present invention. Referring to FIG. 1, the lithium rechargeable battery is fabricated by accommodating an electrode assembly 12 including a positive electrode 13, a negative electrode 15 and a separator 14 in a can 10 along with an electrolyte and then sealing up the upper end of the can 10 with a cap assembly 20. Can 10 has a top surface having an opening, a bottom surface, and the maximum area surface. The cap assembly 20 includes a cap plate 40, an insulating plate 50, a terminal plate 60 and an electrode terminal 30. The cap assembly 20 seals up the opening of can 10 in combination with an insulating case 70.

The electrode terminal 30 is inserted into a terminal through-hole 41 formed in the middle of the cap plate 40. When the electrode terminal 30 is inserted into the terminal through-hole 41, a tube type gasket 46 is connected to the outer circumference of the electrode terminal 30 to insulate the electrode terminal 30 and the cap plate 40. After the cap assembly 20 is mounted on the upper end of the can 10, an electrolyte is injected through an electrolyte injection hole 42 and the electrolyte injection hole 42 is sealed tightly by a plug 43. The electrode terminal 30 is connected with a negative electrode tab 17 of the negative electrode 15 or a positive electrode tab 16 of the positive electrode 13 to act as a negative electrode terminal or a positive electrode terminal.

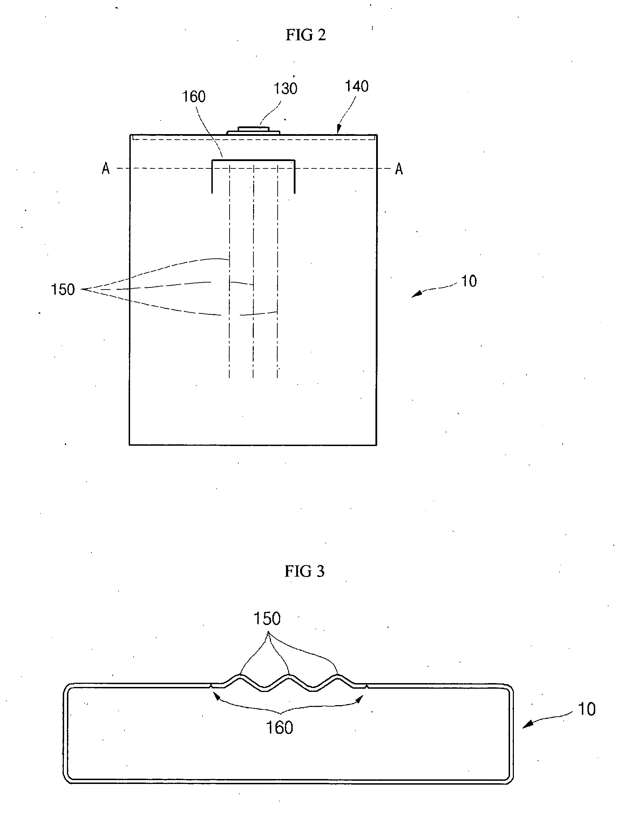

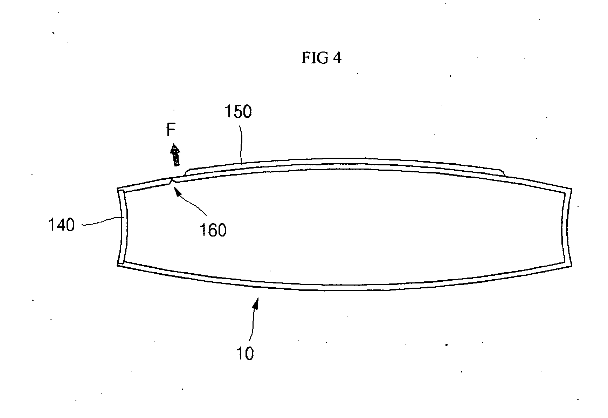

FIG. 2 is a front view illustrating a prismatic can of the lithium ion battery in accordance with the present invention, in which a weakened portion constituting a safety vent and a distortion prevention portion are established in the middle of the maximum area surface. FIG. 3 is a cross sectional view, cut along with line A-A, depicting a can wall, on which the safety vent and the distortion prevention portion of FIG. 2 are formed together. FIG. 4 is a longitudinal sectional view of a cap plate and a can wall for illustrating how the weakened portion of the safety vent is fractured in accordance with the exemplary embodiment of the present invention.

In FIG. 2, a safety vent 160 and a distortion prevention portion 150 are established in the middle of the maximum area surface of a rectangular parallelepiped can 10. The rectangular parallelepiped has six faces, and the maximum area surface means the face that has the largest surface area among the six faces. The safety vent 160 is positioned spaced 5mm apart from the central portion of the upside of the maximum area surface. The central portion corresponding to the middle portion when dividing the upside equally by three, i.e., the central portion takes the width of one third in the whole upside of the maximum area surface connected with a cap plate 140 depicted in the form of the sectional view only in this figure.

The safety vent 160 includes an inverted U-shaped (∩-shaped) weakened portion. The inverted U-shape has a open portion on the bottom, and closed portion on the top. The open portion of the ∩-shaped weakened portion is arranged facing toward the center or bottom of the can 10. Accordingly, the upper horizontal portion (closed portion) of the ∩-shaped weakened portion of the safety vent 160 is parallel to the upper side of the maximum area surface. Here, instead of the horizontal weak area, it is possible to form the weakened portion in the form of a semicircle or a parabola protruding toward the upper side of the maximum area surface, or a ∩-shaped weakened portion is available.

The distortion prevention portion 150 including three consecutive hills (ridges) is established from a portion spaced about 1mm apart from the weakened portion in the up and down direction (in the longitudinal direction) of the battery. The length of the distortion prevention portion 150 extends over the center of the maximum area surface of the prismatic battery. Accordingly, the top of the hills (ridges) established longitudinally is parallel to the vertical portions of the ∩-shaped weakened portion arranged longitudinally. Since the largest distortion will occur along with the central axis in the longitudinal direction over the maximum area surface, it is desirable that the middle hill, among the three hills constituting the distortion prevention portion 150, be arranged along with the central axis of the maximum area surface and the other hills be arranged symmetrically based on the central axis.

Referring to the cross section view of FIG. 3, the weakened portion of the safety vent 160 has notches having a thickness of 0.05mm or less, compared with the other portions of the can wall so that the weakened portion is more readily fractured than the other portions. It can be easily understood that the hill structure of the distortion prevention portion 150 may not be more readily bent in the longitudinal direction than the other portions of the wall of the can 10, since the thickness of the wall of the can 10 is formed windingly without special variations compared with the other portions thereof.

The prismatic can of a rectangular parallelepiped shape has characteristics in that, if gas is generated therein or the electrode assembly is expanded due to the charging, the maximum area surface may become swollen externally and the other surfaces are likely to swell internally as it is generally expanded by the increased internal pressure. In the maximum area surface, although the extent that it is distorted partially are different, the central area swells, whereas, its environs are not expanded since they are connected with the other surfaces as depicted in FIG. 4.

In examining the longitudinal section of the central line formed longitudinally on the maximum area surface, in which the weakened portion of the safety vent 160 and the hill-shaped distortion prevention portion 150 are established, the surface of the cap plate 140, which is the top of the battery or the portion connected with the bottom, hardly swell in the thickness direction of the battery. In the central portion of the maximum area surface, an expansion force acts externally in the thickness direction of the battery.

Accordingly, the wall of the maximum area surface receives forces that act to pull the wall downward and in both side directions in the bottom of the can 10 and the connection portion of the cap plate 140 that are both ends and also receives forces that act to push the wall upward in the center. As a result, it can be seen that the wall of the maximum area surface receives forces that act to bend the wall in the longitudinal direction. However, the hill (ridge) or valley structure formed in the longitudinal direction resists the bending forces by the reaction of the internal pressure and produces forces that act to maintain the plane shape of the maximum area surface wall. The forces acting to bend the wall in the longitudinal direction by the internal pressure and the forces acting to maintaining the plane shape of the maximum area surface wall react most strongly in opposite direction with each other in the end of the distortion prevention portion 150. Accordingly, if a fracture line of a notch shape is established in the end of the distortion prevention portion 150, it is readily fractured, thus acting as a safety vent 160.

The force applied to the weakened portion of the safety vent 160 is considered as similar to the force that acts on an action point of a lever. For example, if regarding the distortion prevention portion as a stick, a virtual connection line connecting two end points forming the opening portion of the ∩-shaped weakened portion functions as a support point of a lever and the horizontal weakened portion forming the closed portion of the ∩-shaped weakened portion becomes an action point of a lever. The spacing distance between the horizontal weakened portion and the virtual connection line connecting the two end points of the opening portion functions as a distance between the action point and the support point and, accordingly, the force acting to bend the wall is amplified in the weakened portion that is the action point. To this end, it is advantageous that the vertical portion in the ∩-shaped weakened portion, parallel to the hills or valleys of the distortion prevention portion, be established longer than the horizontal weak area.

Meanwhile, if the upper horizontal portion of the weakened portion of the ∩-shaped safety vent 160 is formed to contact directly with the distortion prevention portion 150, the weakened portion may be fractured during the formation thereof, since it is very vulnerable to an internal pressure or an external impact. Accordingly, it is desirable that the distortion prevention portion 150 be formed spaced apart from the upper horizontal portion of the weakened portion at regular intervals.

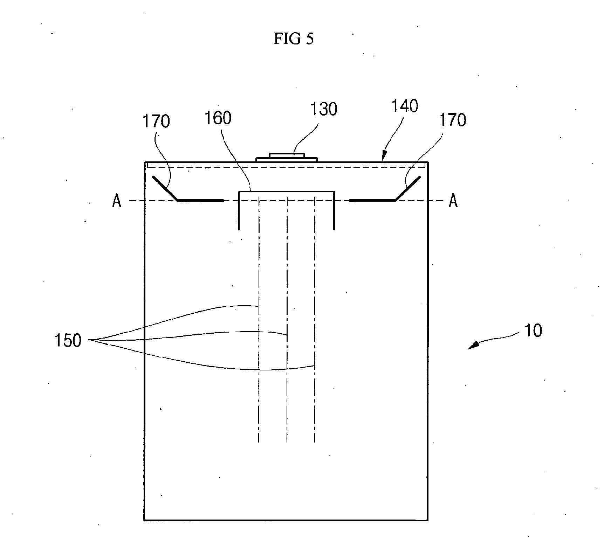

FIG. 5 is a front view depicting a state where a safety vent is established by considering a concept of a maximum distortion portion on the maximum area surface of the prismatic can of FIG. 2. In the configuration of FIG. 5, the general structure of the safety vent 160 and the distortion prevention portion 150 are the same as the exemplary embodiment of FIG. 2, however, the safety vent 160 has a characteristic in that it is established by considering the maximum distortion portion on the maximum area surface.

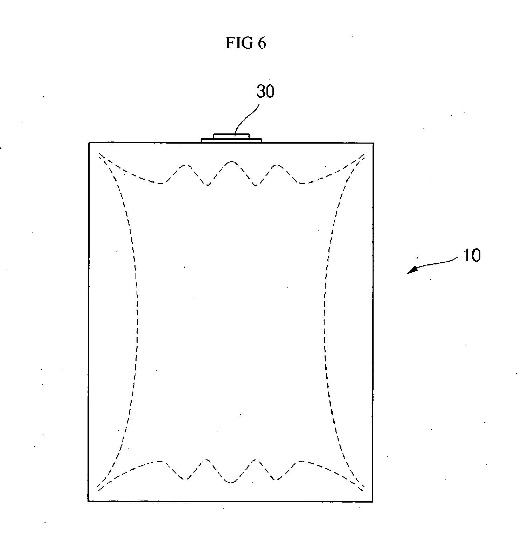

The maximum distortion portion is not marked externally in the process of forming a can, but obtained through a simulation or an actual experiment. The maximum distortion portion is directed to a portion where a relatively high distortion may occur when causing a swelling distortion by increasing the pressure in a case of the battery, in which a prismatic can is sealed up with a cap assembly, and it has a shape of a connected line in the vicinity of each side or a shape of a belt having a regular width. A schematic shape of the maximum distortion portion is nearly a smooth curve like the dotted line marked in FIG. 6, which can be seen as a shape of a line segment curved at least one to be symmetric.

Here, the horizontal cut line that is directed to the closed portion in the middle of the ∩-shaped safety vent 160 is located inclined 5mm, for example, from the maximum distortion portion to the side, and the distortion prevention portion 150 is arranged to intersect the maximum distortion portion. The end of the distortion prevention portion 150 and the horizontal weakened portion are established spaced about 0.5m to 1mm apart from each other to prevent the burst of the horizontal weakened portion in the process of forming the safety vent 160 or the distortion prevention portion 150. Here, if the spacing distance between the horizontal portion of the weakened portion and the maximum distortion portion is set large, the distortion force caused by the internal pressure and the force for preventing the distortion by the distortion prevention portion 150 may be dispersed over the spacing distance, thus not readily causing the burst of the horizontal weak area.

Distortion acceleration portions 170 may be established at both sides of the safety vent 160 along with the maximum distortion portion. The distortion acceleration portions are located at positions substantially identical or close to the maximum distortion portion. Accordingly, if they are formed to be readily folded when distortions are generated by the internal pressure of the can, the forces for folding the wall of the can 10 are concentrated on the line connecting the distortion acceleration portions 170 at both sides of the safety vent 160.

However, since any structure, which is readily folded like the distortion acceleration portion, is not provided on the line (e.g., line A-A in FIG. 5) connecting the distortion acceleration portions 170. Rather, the distortion prevention portion 150 for preventing the distortion is intersected therebetween, therefore, the force acting to the weakened portion of the safety vent 160 may be more concentrated through the distortion prevention portion 150.

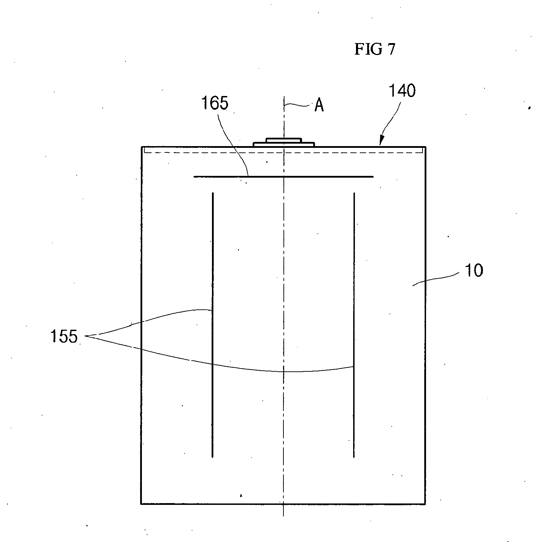

FIGS. 7 to 11 illustrate other exemplary embodiments in other aspects of the present invention. Referring to FIG. 7, the weakened portion is composed of a horizontal weakened portion 165 only, and two lines 155 which are formed by shaping the wall of the can are provided below the horizontal weak area 165. The lines 155 function as the distortion prevention portion 150 of FIG. 5. The lines 155 are provided in such a manner that wrinkles are formed on the wall or partially stepped surfaces are formed using a press frame. The horizontal weakened portion 165 is established at a position more adjacent to the cap plate 140 constituting the cap assembly than the maximum area surface of the prismatic can 10 to intersect a long axis (A) of the maximum area surface.

The line shaped distortion prevention portion 155 can be formed to be substantially parallel to a first direction that extends from the top surface to the bottom surface, or the distortion prevention portion can be formed as a line that is oblique to the first direction.

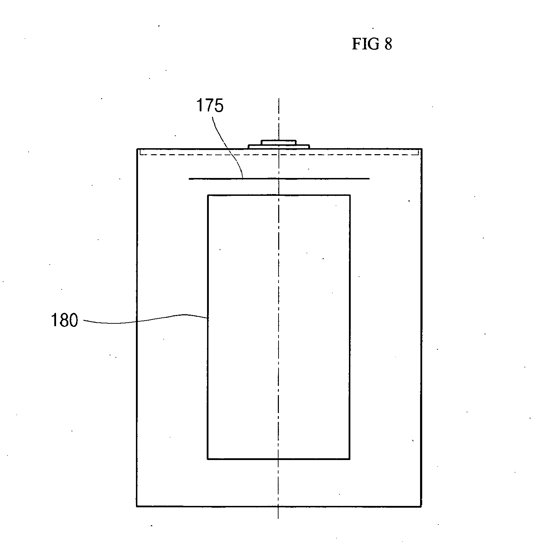

Referring to FIG. 8, the weakened portion is composed of a horizontal weakened portion 175 only, and a rectangular dimple 180 is established below the horizontal weak areas 175 long in the longitudinal direction in order to work as the distortion prevention portion.

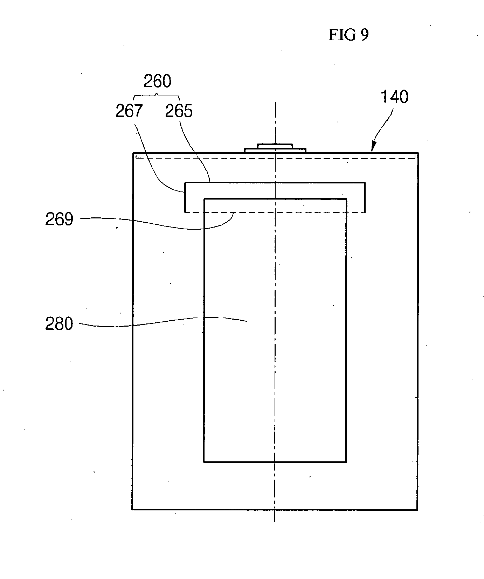

Referring to FIG. 9, a ∩-shaped weakened portion 260 of is composed of a horizontal portion 265 and a vertical portion 267, and a rectangular dimple 280 functioning as the distortion prevention portion is established long in the parallel direction to the long axis.

A short side of the rectangular dimple 280 is positioned more adjacent to the cap plate 140 constituting the cap assembly than a virtual line 269 connecting two ends of the vertical weak areas 267 which constitutes the opening portion of the ∩-shaped weakened portion 260 to be surrounded by the weakened portion 260.

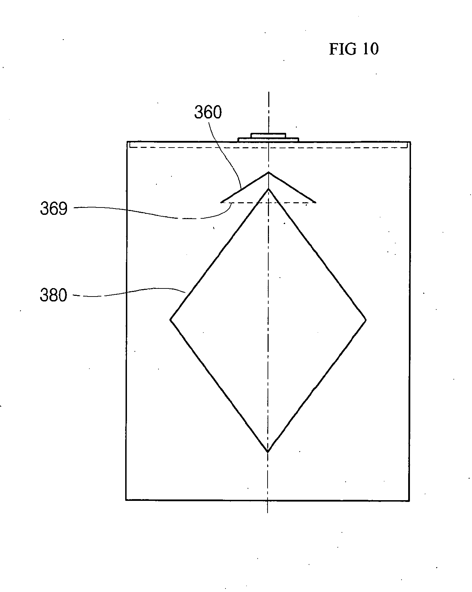

Referring to FIG. 10, a weakened portion 360 is positioned more adjacent to the portion connected with the cap plate 140 than the center of the maximum area surface to intersect the long axis of the maximum area surface. The distortion prevention portion is composed of a lozenge-shaped dimple 380 formed long in the parallel direction to the long axis.

Here, the weakened portion 360 is arranged in a V shape in that the closed portion faces toward the cap plate 140, and the upper corner of the lozenge-shaped dimple 380 is positioned more adjacent to the cap plate 140 than a virtual line 369 connecting two ends constituting the opening portion of the V-shaped weakened portion 360 to be surrounded by the weakened portion 360.

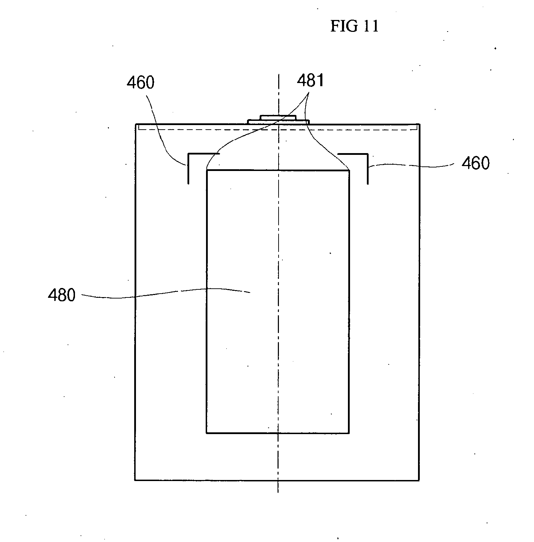

Referring to FIG. 11, the distortion prevention portion is composed of a rectangular dimple 480 formed on the wall of the maximum area surface long in the parallel direction to the long axis. A weakened portion 460 is formed in the shape of a line segment curved on the outside of two upper corners 460 of the cap plate 140 of the rectangular dimple to surround the two upper corners.

As described above, the dimples of the exemplary embodiments depicted in FIGS. 8 to 11 constitute the distortion prevention portion and prevent the maximum area surface from being expanded during the swelling distortion and, simultaneously, function as a lever like the distortion prevention portion of FIG. 5 to amplify the forces for bursting the weakened portion that forms the safety vent. The distortion prevention portion can be a portion such as a stepped portion, a thickened portion, and a partially bent portion on the maximum area surface.

According to the present invention, the forces acting from the safety vent formed on the maximum area surface to both sides of the weak area, generated when the can distortion of the prismatic battery is caused by the internal pressure, are concentrated on the weakened portion to be readily burst, thus preventing the explosion of the battery or the firing to improve the safety and reliability of the prismatic lithium ion battery.

As described above, the exemplary embodiment of the present invention is disclosed through the descriptions and the drawings. The terms are used not to define the meanings thereof or restrict the scope of the present invention described in the claims but to explain the present invention. Therefore, it will be appreciated by those skilled in the art that changes might be made in the embodiments without departing from the invention, the scope of which is defined in the claims.

## Claims

1. A prismatic can type lithium ion rechargeable battery comprising:
an electrode assembly (12) for producing electricity;
a prismatic can (10) accommodating the electrode assembly, the prismatic can having a top surface having an opening, a bottom surface, and a maximum area surface, the maximum area surface including first and second portions, the second portion surrounding the first portion, wherein the first portion comprises:
a distortion prevention portion (150, 155, 180, 280, 380, 480) having a greater resistance to bending in a longitudinal direction of the maximum area surface than the second portion;
the maximum area surface further comprising:
a weakened portion (160, 165, 175, 260, 360, 460) formed in the second portion close to the distortion prevention portion; and
a cap assembly (20) including a cap plate (40) that closes the opening of the top surface of the prismatic can.

2. The prismatic can type lithium ion rechargeable battery as claimed in claim 1, wherein the weakened portion is formed as a line formed outside a periphery of the distortion prevention portion.

3. The prismatic can type lithium ion rechargeable battery as claimed in claim 1 or 2, wherein the distortion prevention portion is formed as a line that is substantially parallel to a first direction that extends from the top surface to the bottom surface, or the distortion prevention portion is formed as a line that is oblique to the first direction.

4. The prismatic can type lithium ion rechargeable battery as claimed in any preceding claim, wherein a notch is formed along the line of the weakened portion.

5. The prismatic can type lithium ion rechargeable battery as claimed in any preceding claim, wherein the line of the weakened portion is formed as a curved line that curves along the periphery of the distortion prevention portion.

6. The prismatic can type lithium ion rechargeable battery as claimed in any one of claims 1 to 4, wherein the weakened portion is formed closer to the cap assembly than a center of the maximum area surface, the weakened portion formed substantially parallel to the top surface; and
the distortion prevention portion is formed in a line shape that is substantially parallel to a first direction that extends from the top surface to the bottom surface, the distortion prevention portion having a prominence or a depression.

7. The prismatic can type lithium ion rechargeable battery as claimed in claim 6, wherein the weakened portion is formed in an inverted U-shape, the top of the inverted U-shaped weakened portion being closer to the cap assembly than the bottom of the inverted U-shaped weakened portion; and
a first end of the line shaped distortion prevention portion is surrounded by the inverted U-shaped weakened portion in a manner that the line shaped distortion prevention portion extends from the first end towards the bottom surface through the bottom of the inverted U-shaped weakened portion.

8. The prismatic can type lithium ion rechargeable battery as claimed in any one of claims 1 to 4, wherein the weakened portion is formed closer to the cap assembly than a center of the maximum area surface, the weakened portion formed substantially parallel to the top surface; and
the distortion prevention portion is formed in an open rectangular shape.

9. The prismatic can type lithium ion rechargeable battery as claimed in claim 8, wherein the weakened portion is formed in an inverted U-shape, the top of the inverted U-shape being closer to the cap assembly than the bottom of the inverted U-shape; and
the open rectangular shaped distortion prevention portion has a shorter side and a longer side, the shorter side of the open rectangular shaped distortion prevention portion being surrounded by the inverted U-shaped weakened portion in a manner that the longer side of the open rectangular shaped distortion prevention portion extends along a first direction, which extends from the top surface to the bottom surface, towards the bottom surface through the bottom of the inverted U-shape.

10. The prismatic can type lithium ion rechargeable battery as claimed in claim 8, wherein the distortion prevention portion has a portion selected from the group consisting of a stepped portion, a thickened portion, and a partially bent portion on the maximum area surface.

11. The prismatic can type lithium ion rechargeable battery as claimed in any one of claims 1 to 4, wherein the weakened portion is formed closer to the cap assembly than a center of the maximum area surface, the weakened portion formed substantially parallel to the top surface; and
the distortion prevention portion is formed as an open lozenge.

12. The prismatic can type lithium ion rechargeable battery as claimed in claim 11, wherein the weakened portion is formed in an inverted V-shape, the top of the inverted V-shape being closer to the cap assembly than the bottom of the inverted U-shape; and
a corner of the open lozenge of the distortion prevention portion is surrounded by the inverted U-shaped weakened portion.

13. The prismatic can type lithium ion rechargeable battery as claimed in any one of claims 1 to 4, wherein the distortion prevention portion is formed in an open rectangular shape, the open rectangular shaped distortion prevention structure having a shorter side and a longer side, the longer side of the open rectangular shaped distortion prevention portion extending along a first direction, which extends from the top surface to the bottom surface, towards the bottom surface; and
the weakened portion is formed to surround a corner of the open rectangular shaped distortion prevention portion, the weakened portion being formed closer to the cap assembly than a center of the maximum area surface.

14. The prismatic can type lithium ion rechargeable battery as claimed in any preceding claim wherein the weakened portion acts as a safety vent rupturable in response to gaseous overpressure in the can.

15. The prismatic can type lithium ion rechargeable battery as claimed in any preceding claim, wherein the distortion prevention portion is formed in a line shape that is substantially parallel to a first direction that extends from the top surface to the bottom surface, the distortion prevention portion having a prominence or a depression.

16. The prismatic can type lithium ion rechargeable battery as claimed in any preceding claim,
wherein the weakened portion includes a connection portion connecting two vertical portions at the top of the vertical portions, and
wherein the distortion prevention portion is arranged spaced about 0.5 to 5mm apart from the connection portion.

17. The prismatic can type lithium ion rechargeable battery as claimed in claim 16, wherein the weakened portion is a portion selected from the group consisting of:
a portion that is parallel to the top surface,
a semicircle or a parabola portion protruding toward the top surface, and
an inverted U-shaped portion in which the top of the inverted U-shaped portion is closer to the top surface than the bottom of the inverted U-shaped portion.

18. The prismatic can type lithium ion rechargeable battery as claimed in claim 1, wherein the distortion prevention portion comprises a corrugated, stepped, thickened or dimpled portion (150, 155, 180, 280, 380, 480) extending longitudinally along the maximum surface area, and the weakened portion comprises a notched line portion (160, 165, 175, 260, 360, 460) formed at one end of and spaced apart from the distortion prevention portion.

## Patentansprüche

1. Prismatische, dosenförmige, wiederaufladbare Lithium-Ionenbatterie mit:
einer Elektrodenanordnung (12) zum Erzeugen von Elektrizität; einer prismatischen Dose (10), in der die Elektrodenanordnung untergebracht ist,
wobei die prismatische Dose eine Oberseite mit einer Öffnung, eine Unterseite und eine maximale Fläche mit einem ersten und einem zweiten Abschnitt besitzt, wobei der zweite Abschnitt den ersten Abschnitt umgibt, und wobei der erste Abschnitt folgendes aufweist:
einen Abschnitt zur Verhinderung der Verformung (150, 155, 180, 280, 380, 480), der eine höhere Biegefestigkeit in Längsrichtung der maximalen Fläche besitzt als der zweite Abschnitt;
wobei die maximale Fläche weiterhin folgendes besitzt:
einen verminderten Abschnitt (160, 165, 175, 260, 360, 460), der in dem zweiten Abschnitt nahe bei dem Abschnitt zur Verhinderung der Verformung gebildet ist; und
eine Kappenanordnung (20) einschließlich einer Platte (40), mit der die Öffnung der Oberseite der prismatischen Dose verschlossen wird.

2. Prismatische, dosenförmige, wiederaufladbare Lithium-Ionenbatterie nach Anspruch 1, wobei der verminderte Abschnitt als eine Linie außerhalb eines Umfangs des Abschnittes zur Verhinderung der Verformung gebildet ist.

3. Prismatische, dosenförmige, wiederaufladbare Lithium-Ionenbatterie nach Anspruch 1 oder 2, wobei der Abschnitt zur Verhinderung der Verformung als eine Linie gebildet ist, die im wesentlichen parallel zu einer ersten Richtung verläuft, die sich von der Oberseite zu der Unterseite erstreckt, oder der Abschnitt zur Verhinderung der Verformung ist als eine Linie gebildet, die schräg zu der ersten Richtung verläuft.

4. Prismatische, dosenförmige, wiederaufladbare Lithium-Ionenbatterie nach einem der vorhergehenden Ansprüche, wobei entlang der Linie des verminderten Abschnittes eine Einkerbung gebildet ist.

5. Prismatische, dosenförmige, wiederaufladbare Lithium-Ionenbatterie nach einem der vorhergehenden Ansprüche, wobei die Linie des verminderten Abschnittes als eine gekrümmte Linie gebildet ist, die sich entlang dem Umfang des Abschnittes zur Verhinderung der Verformung krümmt.

6. Prismatische, dosenförmige, wiederaufladbare Lithium-Ionenbatterie nach einem der vorhergehenden Ansprüche 1 bis 4, wobei der verminderte Abschnitt näher an der Kappenanordnung gebildet ist als die Mitte der maximalen Fläche, wobei der verminderte Abschnitt im wesentlichen parallel zu der Oberseite gebildet ist; und
der Abschnitt zur Verhinderung der Verformung in einer Linienform gebildet ist, die im wesentlichen parallel zu einer ersten Richtung verläuft, welche sich von der Oberseite zu der Unterseite erstreckt, wobei der Abschnitt zur Verhinderung der Verformung eine Erhebung oder eine Vertiefung aufweist.

7. Prismatische, dosenförmige, wiederaufladbare Lithium-Ionenbatterie nach Anspruch 6, wobei der verminderte Abschnitt in umgekehrter U-Form gebildet ist, wobei das obere Ende des verminderten Abschnittes in umgekehrter U-Form näher an der Kappenanordnung liegt als das untere Ende des verminderten Abschnittes in umgekehrter U-Form; und
ein erstes Ende des linienförmigen Abschnittes zur Verhinderung der Verformung von dem verminderten Abschnitt in umgekehrter U-Form derart umgeben ist, dass der linienförmige Abschnitt zur Verhinderung der Verformung von dem ersten Ende durch das untere Ende des verminderten Abschnittes in umgekehrter U-Form zu der Unterseite verläuft.

8. Prismatische, dosenförmige, wiederaufladbare Lithium-Ionenbatterie nach einem der vorhergehenden Ansprüche 1 bis 4, wobei der verminderte Abschnitt näher an der Kappenanordnung gebildet ist als die Mitte der maximalen Fläche, wobei der verminderte Abschnitt im wesentlichen parallel zu der Oberseite gebildet ist; und
der Abschnitt zur Verhinderung der Verformung in einer offenen, rechteckigen Form gebildet ist.

9. Prismatische, dosenförmige, wiederaufladbare Lithium-Ionenbatterie nach Anspruch 8, wobei der verminderte Abschnitt in einer umgekehrten U-Form gebildet ist, wobei das obere Ende der umgekehrten U-Form näher an der Kappenanordnung liegt als das untere Ende der umgekehrten U-Form; und der Abschnitt zur Verhinderung der Verformung mit offener, rechteckiger Form eine kürzere Seite und eine längere Seite aufweist, wobei die kürzere Seite des Abschnittes zur Verhinderung der Verformung mit offener, rechteckiger Form von dem verminderten Abschnitt in umgekehrter U-Form derart umgeben ist, dass die längere Seite des Abschnittes zur Verhinderung der Verformung mit offener, rechteckiger Form entlang einer ersten Richtung verläuft, die sich von der Oberseite durch das untere Ende der umgekehrten U-Form zu der Unterseite erstreckt.

10. Prismatische, dosenförmige, wiederaufladbare Lithium-Ionenbatterie nach Anspruch 8, wobei der Abschnitt zur Verhinderung der Verformung einen aus der Gruppe ausgewählten Abschnitt besitzt, welcher aus einem abgestuften Abschnitt, einem verdickten Abschnitt und einem teilweise gekrümmten Abschnitt an der maximalen Fläche besteht.

11. Prismatische, dosenförmige, wiederaufladbare Lithium-Ionenbatterie nach einem der Ansprüche 1 bis 4, wobei der verminderte Abschnitt näher an der Kappenanordnung gebildet ist als die Mitte der maximalen Fläche, wobei der verminderte Abschnitt im wesentlichen parallel zu der Oberseite gebildet ist; und
der Abschnitt zur Verhinderung der Verformung als offener Rhombus gebildet ist.

12. Prismatische, dosenförmige, wiederaufladbare Lithium-Ionenbatterie nach Anspruch 11, wobei der verminderte Abschnitt in umgekehrter V-Form gebildet ist, wobei das obere Ende der umgekehrten V-Form näher an der Kappenanordnung liegt als das untere Ende der umgekehrten V-Form; und eine Ecke des offenen Rhombus des Abschnittes zur Verhinderung der Verformung von dem verminderten Abschnitt in umgekehrter V-Form umgeben ist.

13. Prismatische, dosenförmige, wiederaufladbare Lithium-Ionenbatterie nach einem der Ansprüche 1 bis 4, wobei der Abschnitt zur Verhinderung der Verformung eine offene, rechteckige Form auf weist, wobei der offene, rechteckige Aufbau zur Verhinderung der Verformung eine kürzere Seite und eine längere Seite besitzt, wobei die längere Seite des offenen, rechteckigen Abschnittes zur Verhinderung der Verformung entlang einer ersten Richtung verläuft, die sich von der Oberseite zu der Unterseite erstreckt; und
der verminderte Abschnitt derart gebildet ist, dass er eine Ecke des offenen, rechteckigen Abschnittes zur Verhinderung der Verformung umgibt, wobei der verminderte Abschnitt näher an der Kappenanordnung gebildet ist als die Mitte der maximalen Fläche.

14. Prismatische, dosenförmige, wiederaufladbare Lithium-Ionenbatterie nach einem der vorhergehenden Ansprüche, wobei der verminderte Abschnitt als Sicherheitsentlüftungsöffnung wirkt, die als Reaktion auf Gasüberdruck in der Dose zerbersten kann.

15. Prismatische, dosenförmige, wiederaufladbare Lithium-Ionenbatterie nach einem der vorhergehenden Ansprüche, wobei der Abschnitt zur Verhinderung der Verformung linienförmig gebildet ist, wobei die Linienform im wesentlichen parallel zu einer ersten Richtung verläuft, die sich von der Oberseite zu der Unterseite erstreckt, wobei der Abschnitt zur Verhinderung der Verformung eine Erhebung oder eine Vertiefung aufweist.

16. Prismatische, dosenförmige, wiederaufladbare Lithium-Ionenbatterie nach einem der vorhergehenden Ansprüche,
wobei der verminderte Abschnitt einen Verbindungsabschnitt umfasst, der zwei vertikale Abschnitte an dem oberen Ende der vertikalen Abschnitte miteinander verbindet, und
wobei der Abschnitt zur Verhinderung der Verformung in einem Abstand von ungefähr 0,5 bis 5 mm von dem Verbindungsabschnitt entfernt angeordnet ist.

17. Prismatische, dosenförmige, wiederaufladbare Lithium-Ionenbatterie nach Anspruch 16, wobei es sich bei dem verminderten Abschnitt um einen Abschnitt handelt, der aus der Gruppe ausgewählt ist, die aus folgendem besteht:
einem Abschnitt, der parallel zu der Oberseite verläuft,
einem halbkreisförmigen oder parabelförmigen Abschnitt, der zu der Oberseite hin vorsteht, und
einem Abschnitt mit umgekehrter U-Form, bei dem das obere Ende des Abschnittes mit umgekehrter U-Form näher an der Oberseite liegt als das untere Ende des Abschnittes mit umgekehrter U-Form.

18. Prismatische, dosenförmige, wiederaufladbare Lithium-Ionenbatterie nach Anspruch 1, wobei der Abschnitt zur Verhinderung der Verformung einen gewellten, abgestuften, verdickten Abschnitt oder einen Abschnitt mit Vertiefungen (150, 155, 180, 280, 380, 480) umfasst, der sich in Längsrichtung entlang der maximalen Fläche erstreckt, und der verminderte Abschnitt einen Abschnitt mit eingekerbter Linie (160, 165, 175, 260, 360, 460) umfasst, der an einem Ende gebildet ist und in einem Abstand zu dem Abschnitt zur Verhinderung der Verformung angeordnet ist.

## Revendications

1. Batterie rechargeable lithium-ion du type à bac prismatique comprenant :
un ensemble d'électrodes (12) destiné à produire de l'électricité ;
un bac prismatique (10) accueillant l'ensemble d'électrodes, le bac prismatique ayant une face supérieure ayant une ouverture, une face de fond, et une face à superficie maximale, la face à superficie maximale comportant une première et une seconde parties, la seconde partie entourant la première partie, où la première partie comprend :
une partie (150, 155, 180, 280, 380, 480) de prévention de la distorsion ayant une résistance au fléchissement plus importante dans une direction longitudinale de la face à superficie maximale que la seconde partie ;
la face à superficie maximale comprenant en outre :
une partie affaiblie (160, 165, 175, 260, 360, 460) formée dans la seconde partie proche de la partie de prévention de la distorsion ; et
un ensemble de coiffe (20) comportant une plaque de coiffe (40) qui ferme l'ouverture de la face supérieure du bac prismatique.

2. Batterie rechargeable lithium-ion du type à bac prismatique telle que revendiquée dans la revendication 1, où la partie affaiblie est formée comme une ligne que l'on forme à l'extérieur d'une périphérie de la partie de prévention de la distorsion.

3. Batterie rechargeable lithium-ion du type à bac prismatique telle que revendiquée dans la revendication 1 ou 2, où la partie de prévention de la distorsion est formée comme une ligne qui est sensiblement parallèle à une première direction qui s'étend de la face supérieure jusqu'à la face de fond, ou la partie de prévention de la distorsion est formée comme une ligne qui est oblique par rapport à la première direction.

4. Batterie rechargeable lithium-ion du type à bac prismatique telle que revendiquée dans l'une quelconque des revendications précédentes, où une encoche est formée le long de la ligne de la partie affaiblie.

5. Batterie rechargeable lithium-ion du type à bac prismatique telle que revendiquée dans l'une quelconque des revendications précédentes, où la ligne de la partie affaiblie est formée comme une ligne incurvée qui s'incurve le long de la périphérie de la partie de prévention de la distorsion.

6. Batterie rechargeable lithium-ion du type à bac prismatique telle que revendiquée dans l'une quelconque des revendications 1 à 4, où la partie affaiblie est formée plus proche de l'ensemble de coiffe qu'un centre de la face à superficie maximale, la partie affaiblie formée sensiblement parallèle à la face supérieure ; et
la partie de prévention de la distorsion est formée sous forme d'une ligne qui est sensiblement parallèle à une première direction qui s'étend de la face supérieure jusqu'à la face de fond, la partie de prévention de la distorsion ayant une protubérance ou une dépression.

7. Batterie rechargeable lithium-ion du type à bac prismatique telle que revendiquée dans la revendication 6, où la partie affaiblie est formée sous la forme d'un U inversé, le haut de la partie affaiblie en forme de U inversé étant plus proche de l'ensemble de coiffe que le fond de la partie affaiblie en forme de U inversé ; et
une première extrémité de la partie de prévention de la distorsion en forme de ligne est entourée par la partie affaiblie en forme de U inversé de telle sorte que la partie de prévention de la distorsion en forme de ligne s'étende de la première extrémité vers la face de fond à travers le fond de la partie affaiblie en forme de U inversé.

8. Batterie rechargeable lithium-ion du type à bac prismatique telle que revendiquée dans l'une quelconque des revendications 1 à 4, où la partie affaiblie est formée plus proche de l'ensemble de coiffe qu'un centre de la face à superficie maximale, la partie affaiblie formée sensiblement parallèle de la face supérieure ; et
la partie de prévention de la distorsion est formée selon une forme rectangulaire ouverte.

9. Batterie rechargeable lithium-ion du type à bac prismatique telle que revendiquée dans la revendication 8, où la partie affaiblie est formée selon une forme de U inversé, le haut de la forme de U inversé étant plus proche de l'ensemble de coiffe que le fond de la forme de U inversé ; et
la partie de prévention de la distorsion de forme rectangulaire ouverte a un côté plus court et un côté plus long, le côté plus court de la partie de prévention de la distorsion de forme rectangulaire ouverte étant entouré par la partie affaiblie en forme de U inversé de telle sorte que le côté plus long de la partie de prévention de la distorsion de forme rectangulaire ouverte s'étende de long d'une première direction, qui s'étend de la face supérieure jusqu'à la face de fond, vers la face de fond à travers le fond de la forme de U inversé.

10. Batterie rechargeable lithium-ion du type à bac prismatique telle que revendiquée dans la revendication 8, où la partie de prévention de la distorsion a une partie sélectionnée du groupe constitué par une partie étagée, une partie épaissie, et une partie partiellement coudée sur la face à superficie maximale.

11. Batterie rechargeable lithium-ion du type à bac prismatique telle que revendiquée dans l'une quelconque des revendications 1 à 4, où la partie affaiblie est formée plus proche de l'ensemble de coiffe qu'un centre de la face à superficie maximale, la partie affaiblie formée sensiblement parallèle à la face supérieure ; et
la partie de prévention de la distorsion est formée comme un losange ouvert.

12. Batterie rechargeable lithium-ion du type à bac prismatique telle que revendiquée dans la revendication 11, où la partie affaiblie est formée selon une forme de V inversé, le haut de la forme de V inversé étant plus proche de l'ensemble de coiffe que le fond de la forme de U inversé ; et
un coin du losange ouvert de la partie de prévention de la distorsion est entouré par la partie affaiblie en forme de U inversé.

13. Batterie rechargeable lithium-ion du type à bac prismatique telle que revendiquée dans l'une quelconque des revendications 1 à 4, où la partie de prévention de la distorsion est formée selon une forme rectangulaire ouverte, la structure de prévention de la distorsion de forme rectangulaire ouverte ayant un côté plus court et un côté plus long, le côté plus long de la partie de prévention de la distorsion de forme rectangulaire ouverte s'étendant le long d'une première direction, qui s'étend de la face supérieure jusqu'a la face de fond, en direction de la face de fond ; et
la partie affaiblie est formée de sorte à entourer un coin de la partie de prévention de la distorsion de forme rectangulaire ouverte, la partie affaiblie étant formée plus proche de l'ensemble de coiffe qu'un centre de la face à superficie maximale.

14. Batterie rechargeable lithium-ion du type à bac prismatique telle que revendiquée dans l'une quelconque des revendications précédentes où la partie affaiblie fait office d'évent de sécurité qui peut casser en réponse à une surpression de gaz dans le bac.

15. Batterie rechargeable lithium-ion du type à bac prismatique telle que revendiquée dans l'une quelconque des revendications précédentes, où la partie de prévention de la distorsion est formée sous la forme d'une ligne qui est sensiblement parallèle à une première direction qui s'étend de la face supérieure jusqu'à la face de fond, la partie de prévention de la distorsion ayant une protubérance ou une dépression.

16. Batterie rechargeable lithium-ion du type à bac prismatique telle que revendiquée dans l'une quelconque des revendications précédentes,
où la partie affaiblie comporte une partie de liaison qui relie deux parties verticales en haut des parties verticales, et
où la partie de prévention de la distorsion est agencée à environ 0,5 à 5 mm à l'écart de la partie de liaison.

17. Batterie rechargeable lithium-ion du type à bac prismatique telle que revendiquée dans la revendication 16, où la partie affaiblie est une partie sélectionnée du groupe constitué par :
une partie qui est parallèle à la face supérieure,
un demi cercle ou une partie parabolique faisant saillie en direction de la face supérieure, et
une partie en forme de U inversé dans laquelle le haut de la partie en forme de U inversé est plus proche de la face supérieure que le fond de la partie en forme de U inversé.

18. Batterie rechargeable lithium-ion du type à bac prismatique telle que revendiquée dans la revendication 1, où la partie de prévention de la distorsion comprend une partie ondulée, étagée, épaissie ou à empreintes (150, 155, 180, 280, 380, 480) s'étendant longitudinalement le long de la face à superficie maximale, et la partie affaiblie comprend une partie de ligne à encoche (160, 165, 175, 260, 360, 460) formée au niveau d'une extrémité de la partie de prévention de la distorsion tout en étant écartée de celle-ci.
